(19) Europäisches Patentamt
European Patent Office
Office européen des brevets

(11) EP 4 789 743 A1

(12) **EUROPEAN PATENT APPLICATION**

(43) Date of publication:
**12.08.2026 Bulletin 2026/33**

(21) Application number: **25210097.9**

(22) Date of filing: **21.10.2025**

(51) International Patent Classification (IPC):
***B01D 7/02*** *(2006.01)* ***B01D 9/00*** *(2006.01)*
***B01D 17/02*** *(2006.01)* ***B01D 17/04*** *(2006.01)*

(52) Cooperative Patent Classification (CPC):
**B01D 17/045; B01D 1/02; B01D 7/02; B01D 9/00; B01D 17/0217; B01D 17/042; B01D 17/044**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.02.2025 US 202519048191**

(71) Applicant: **PureCycle Technologies, Inc.**
**Orlando, Florida 32801 (US)**

(72) Inventors:
- **MORETTI, David**
  **Halesite, NY 11743 (US)**
- **RENTSCH, Christopher P**
  **Midland, MI 48642 (US)**
- **SARVER, Joseph**
  **Durham, NC 27703 (US)**
- **SCHLOWSKY, George**
  **Paramus, NJ 07652 (US)**
- **VITITOE, Jason**
  **Flatwoods, KY 41139 (US)**
- **WEBER, Michael W**
  **Houston, TX 77044 (US)**

(74) Representative: **Barker Brettell LLP**
**100 Hagley Road**
**Edgbaston**
**Birmingham B16 8QQ (GB)**

(54) **SYSTEM AND METHOD FOR POLYMER PURIFICATION USING COIL COALESCER**

(57) A system and method for separating and removing contaminants from a fluid stream (102) comprised of carrier fluid and contaminants. The system and method involves circulating the fluid stream through a coiled pipe or tube (118), creating a phase separation between the carrier fluid and contaminants, depositing the carrier fluid and contaminants into an expansion vessel (106) proximate the outlet of the coil (118), and separating the larger density contaminant particles from the smaller density carrier fluid.

108
110a
104
102
122
114
118
116
110b
106
120
112

FIG. 1

EP 4 789 743 A1

## Description

FIELD OF DISCLOSURE

The present invention generally relates to a system and method for separating and removing contaminants from a fluid stream, at a commercial scale.

BACKGROUND

Mechanical recycling is used commonly in the United States to convert plastic waste into a reusable format for subsequent manufacturing. However, there are several limitations to the mechanical recycling process that result in poor quality recycled plastic materials. Specifically, recycled (processed) plastic pellets often contain contaminants and mixtures of dyes and pigments from the original plastic articles. To overcome these limitations, several methods have been developed to purify contaminated plastics. One such example is dissolution recycling, which produces a recycled plastic that is odorless, colorless, and without a significant amount of contamination.

The process of dissolution recycling polypropylene is known in the art. Numerous patents have addressed the solvent dissolution recycling using a heavy solvent such as in U.S. Patent Publication No. US2023/0174736A1, WIPO Publication No. WO2022/223491 A2, or WIPO Publication No. WO2022/219090 A1. Other patents have addressed the idea of solvent dissolution recycling using a light solvent such as in U.S. Patent Nos. 10,899,906, 11,008,433, and 10,961,366. The art does not, however, describe how to execute the requisite steps continuously at a large scale. Specifically, U.S. Patent No. 9,834,621 describes a solvent dissolution recycling process in which the examples are limited to approximately 250 g of recycled material at a time. However, U.S. Patent App. Ser. No. 18/441,416 discloses a system and method for continuously purifying contaminated plastics, such as polypropylene polymers, at a commercial scale.

An effective dissolution recycling process requires a method to remove contaminants from the solvent used to purify recycled plastic. In many current industrial processes, contaminants are effectively removed from a fluid stream by altering process conditions to significantly decrease the density of the carrier fluid while the contaminants remain a dense liquid or solid. This can be achieved by raising the temperature or lowering the pressure of the fluid stream. Reducing the density of the fluid stream enables separation of the more dense contaminant particles (which are separated from the fluid by gravity).

In some cases, changing the conditions of the fluid stream can induce a phase change within the fluid stream. Phase changes from liquid to gas or large reductions in pressure of a supercritical fluid can result in very high velocities in a closed, continuous system. This high flow velocity of the gas can make it difficult to separate the contaminants as they will become entrained in the gas flow. One potential solution is to flow the fluid stream through large vessels to reduce the average gas velocity to encourage separation of contaminants. However large vessels may be prohibitively expensive or incompatible with the design requirements of the project.

Accordingly, a need exists for an improved method and a more compact system of removing contaminants from a fluid stream continuously and at commercial scale.

SUMMARY OF DISCLOSURE

The present invention is directed to a coil coalescer system and method for increasing the removal efficiency of contaminant particles from a fluid stream (which may include a gas, a liquid and/or supercritical fluid streams). An embodiment includes a method for removing contaminants from a fluid stream comprising a mixture of a carrier fluid and a contaminant material. In an embodiment, the method comprises introducing the fluid stream through an inlet of a coil tube; in the coil tube, inducing the formation of at least a first phase and a second phase of the fluid stream, wherein the first phase has a lower density than the second phase, and wherein a majority of the first phase comprises the carrier fluid and a majority of the second phase comprises the contaminant material; flowing the fluid stream from an outlet of the coil tube into an expansion vessel, the expansion vessel having a high point outlet and a low point outlet lower than the high point outlet; flowing the second phase through the low point outlet; flowing the first phase through the high point outlet; and passing the first phase through a particulate filter to remove remaining contaminant material and create a reduced contaminant fluid stream.

The system and method may also comprise the steps of introducing a fluid stream to a coiled pipe or tube. In an embodiment, the fluid stream is a mixture comprising contaminants and a carrier fluid. The contaminants can be either soluble or insoluble in the carrier fluid or become insoluble by changes in temperature or pressure, or both. The system and method also comprises a step of circulating the fluid stream through a coiled pipe or tube. Circulating the fluid stream through the coiled pipe or tube at sufficient velocity results in a loss of pressure in the fluid stream which reduces the density of the carrier fluid and leads to the formation of two immiscible phases. A majority of the first phase is comprised of carrier fluid and a majority of the second phase is comprised of contaminant material. By circulating the two phases through the

curve of the coil, centrifugal forces act on the carrier fluid and contaminants. The centrifugal forces pull the more dense contaminant material to the outer walls of the coil. The contaminant material could be present as small particles, but these dense particles coalesce along the outer walls of the coil to form large particles. Further, the system and method comprises an expansion vessel that is in fluid connection with the outlet of the coil. The contaminant material collects in the bottom of the expansion vessel, while the carrier fluid stream flows out of the top of the expansion vessel.

The coiled tube or pipe provides a gradual expansion of the carrier fluid and minimizes turbulence. Gradual, instead of rapid, expansion of the carrier fluid results in formation of larger contaminant particles, whereas rapid expansion of the carrier fluid increases turbulence and, as a result, decreases the size of contaminant particles which makes the contaminant particles less likely to separate from the carrier fluid due to the flow velocity.

Another embodiment includes a system for removing contaminants from a fluid stream, the fluid stream comprising a mixture of carrier fluid and contaminants. An embodiment of the system comprises' a coil tube having an inlet to receive the fluid stream, an outlet, and a first pressure control valve upstream of the inlet of the coil tube; wherein the coil tube comprises a plurality of sections having different diameters, the diameter of the coil tube sections increasing in size from a section proximate the inlet to a section proximate the outlet of the coil tube; an expansion vessel having an inlet in fluid connection with the outlet of the coil tube, the expansion vessel having a high point outlet and a low point outlet; and a particulate filter to collect low density contaminants.

Once the carrier fluid is separated from the contaminants, the carrier fluid can be reintroduced to the recycling process, such as the process in U.S. Patent Application Ser. No. 18/441,416, after the Solvent Recovery and Purification Step disclosed therein.

## BRIEF DESCRIPTION OF THE DRAWINGS

FIG. 1 is a fluid flow diagram of the coil coalescer system depicting the passage of a fluid stream through a coil and into an expansion vessel.

FIG. 2 depicts an embodiment of the coil tube (or pipe) used in the coil coalescer system.

FIG. 3 includes two graphs depicting the efficiency of a contaminant removal system which does not include a coil tube.

FIG. 4 includes two graphs depicting the contaminant removal efficiency of the coil coalescer system.

## DETAILED DESCRIPTION

This disclosure as a whole may be best understood by reference to the following detailed description when read in conjunction with the accompanying drawings, drawing descriptions, abstract, background, field of disclosure, and associated headings. Identical reference numbers when found on different figures identify the same elements or a functionally equivalent element. The elements listed in the abstract are not referenced but nevertheless refer by association to the elements of the detailed description and associated disclosure.

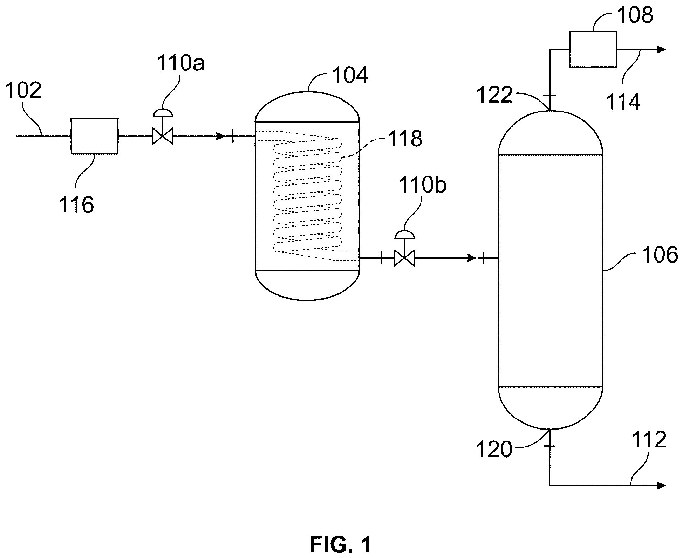

FIG. 1 depicts an embodiment of the coil coalescer system and method 100 for removing contaminants from a fluid stream. The embodiment of FIG. 1 includes a step of feeding a fluid stream mixture 102 into a first end ("inlet") of a coil tube or pipe 118. In an embodiment, contaminants are dissolved within the fluid stream mixture and form a homogenous fluid stream mixture 102. The fluid stream 102 is circulated through the coil tube 118 causing a drop in pressure. The pressure drop induces phase separation of the homogenous fluid stream mixture 102 and creates two distinct phases. A resulting first phase is primarily comprised of carrier fluid 114 and a second phase is primarily comprised of contaminant 112. In an embodiment, the carrier fluid phase 114 comprises a gas, liquid, or supercritical fluid and the contaminant phase 112 comprises a liquid or a solid and has a greater density than the carrier fluid phase. In a preferred embodiment, the carrier fluid phase 114 is vaporized to form a gas. In an alternative embodiment, the mixture of the contaminants and carrier fluid is not homogenous when it is fed into the inlet of the coil tube or pipe 118.

The coil tube 118 partially restricts the flow of the fluid stream mixture 102, which results in a loss of pressure in the fluid stream mixture 102 as it circulates through the coil tube 118. This approach affords a gradual reduction in pressure rather than a rapid expansion of gas that would occur in a conventional control valve. Without limiting this invention to any particular theory, the ability to reduce the violent expansion of gas prevents break-up of contaminants particles. A more gradual pressure transition favors the formation of larger contaminant particles that more readily separate from the fluid stream mixture 102 in the expansion vessel 106.

The flow of the fluid stream mixture 102 through the coil tube 118 applies a centrifugal force to both phases of the fluid stream mixture 102. This centrifugal force preferentially pulls the more dense particles (i.e., the contaminant material) toward the outer wall of the coil tube 118 where they can coalesce to form larger particles.

The carrier fluid phase 114 and contaminant phase 112 are ejected from the end ("outlet") of the coil tube or pipe

118 and into an expansion vessel 106. The contaminant 112, having a higher density than the carrier fluid 114, collects in the bottom of the expansion vessel 106. The carrier fluid phase 114 is also, or is conversely, free to flow out the top of the expansion vessel 106.

The contaminant phase 112 is removed from the expansion vessel 106 through a low point outlet 120 proximate the bottom of the expansion vessel. The carrier fluid phase 114 is removed from the expansion vessel 106 via a high point outlet 122 proximate the top of the expansion vessel 106. In an embodiment, the carrier fluid phase 114 passes through a particulate filter 108 located within or downstream of the expansion vessel 106 to remove leftover contaminant particles remaining in the carrier fluid phase 114, resulting in a reduced contaminant fluid stream. In an embodiment, the particulate filter 108 removes all remaining contaminant material in the carrier fluid phase 114. In alternative embodiments, the expansion vessel 106 may not include a particulate filter 108.

In an embodiment, the system and method may comprise a control valve 110a upstream of the inlet of the coil tube 118 to modulate the pressure (and, in turn, the velocity) of the entering fluid stream mixture 102. The upstream control valve 110a is designed to reduce the pressure of the fluid stream mixture 102 prior to entering the coil tube 118. In embodiments comprising an upstream control valve 110a, the coil tube 118 may be responsible for between 40% to 60% of the drop in pressure. In such cases, the coil tube 118 may be designed to achieve a pressure drop of greater than 600 psi. The control valve 110a in certain embodiments provides additional flexibility to control the pressure of the fluid stream mixture 102. This functionality enables a user to have the ability to target an absolute pressure in the coil tube 118 that will ensure that the formation of two phases occurs within the coil tube 118 rather than as the fluid stream mixture 102 passes through the control valve 110a. The control valve 110a also allows the final pressure of the fluid stream mixture 102 to be directly controlled, independent of the pressure lost as the fluid 102 flows through the coil 118.

In an embodiment, the system and method 100 may comprise a second control valve 110b downstream of the coil tube 118 and upstream of the expansion vessel 106 to induce an additional pressure reduction. In embodiments with two control valves 110a, 110b, the pressure can be set to ensure the phase change occurs within the coil tube 118 and then reduced further prior to entering the expansion vessel 106 in order to accommodate the requirements of the equipment downstream of the coil tube 118. In an embodiment, the fluid stream mixture 102 passes through a heat exchanger 116 upstream of the first control valve 110a.

In an embodiment, the coil tube 118 is heated to overcome cooling from the isenthalpic expansion of the fluid stream mixture 102 within the coil tube 118. The coil tube 118 may be heat jacketed or wrapped with an electrical heating element. Alternatively, the coil tube 118 may be heated by enclosing the coil tube 118 within a second vessel 104 and flowing a heat transfer fluid through the second vessel 104. FIG. 1, depicts the coil tube 118 and second vessel 104 together as a coil coalescer. However, the second vessel 104 is optional.

In an embodiment, the coil tube 118 gradually changes in diameter to accommodate the expansion of the fluid stream mixture 102 as the pressure decreases through the coil tube 118. The pressure within the coil tube 118 decreases as fluid stream mixture 102 velocity increases. High fluid velocities lead to turbulence which results in the formation of smaller contaminant particles, which are more difficult to separate from the fluid stream mixture 102. The coil tube 118 diameter is optimized to achieve a sufficient pressure drop and minimize the turbulence of fluid flow within the coil tube 118 as the fluid stream mixture 102 expands and the velocity increases.

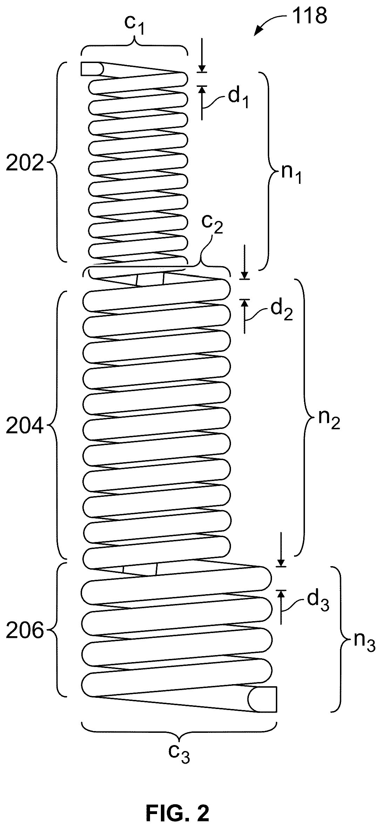

In an embodiment, and as shown in FIG. 2, the coil tube 118 consists of a first section 202, second section 204, and third section 206. Each section of the coil tube 118 comprises a specific coil tube diameter $d_1$, $d_2$, $d_3$, a specific coil loop diameter $c_1$, $c_2$, $c_3$, and a certain number of coil loops $n_1$, $n_2$, $n_3$. In an embodiment, each section of the coil tube 202, 204, 206 has a coil tube diameter $d_1$, $d_2$, $d_3$ of between at least quarter inch and up to 5 inches and a coil loop diameter $c_1$, $c_2$, $c_3$ of between at least 6 inches and up to 24 inches. In an embodiment, each section of coil tube 202, 204, 206 has between 1 and 50 coil loops $n_1$, $n_2$, $n_3$. In an embodiment, the first section 202 comprises, in one or more particular embodiments, a one inch diameter coil tube $d_1$ which is coiled into 10 coil loops $n_1$ which are eight inches in diameter $c_1$. The second section 204, in one or more particular embodiments, comprises a 1.5 inch diameter coil tube $d_2$ which is coiled into 11 coil loops $n_2$ which are twelve inches in diameter $c_2$. The third section 206, in one or more particular embodiments, comprises a 2 inch diameter coil tube $d_3$ which is coiled into 4 coil loops $n_3$ which are sixteen inches in diameter $c_3$.

These pipe sections 202, 204, 206 are installed within the second, pressurized vessel 104 to allow steam contacting on the outside of the coil tube 118 in order to control the temperature. In this embodiment, the coil diameters are chosen to limit the fluid velocity below 500 ft/sec.

Other pipe and coil diameters may also be utilized without departing from the invention, as described generally herein. In an embodiment, the diameter $d_1$, $d_2$, $d_3$ of the coil is optimized to target a specific Reynolds number to induce a desired pressure drop while minimizing turbulence. In conditions where the fluid stream mixture 102 has a viscosity of less than one centipoise, the preferred diameter of the tubing would be set to achieve a Reynolds number of between 50,000 and 300,000. The Reynolds number can be calculated as follows:

$$Re = vw\rho_g / \mu_g$$

Where:

$v$ is the fluid stream velocity
$w$ is the tubing diameter
$\rho_g$ is the fluid stream density
$\mu_g$ is the fluid stream viscosity

In a preferred embodiment, the coil tube diameter $d_1, d_2, d_3$ is selected to achieve a fluid velocity of between 50 to 500 ft/sec. The pressure at the inlet of the coil tube 118 is approximately 500 to 5,000 psig. In an embodiment, the pressure at the inlet of the coil tube 118 is approximately 1,000 to 1,500 psig. The pressure at the outlet of the coil tube 118 is approximately 50 to 4,000 psig. In an embodiment, the pressure at the outlet of the coil tube 188 is approximately 50 to 150 psig. The operating temperature throughout the coil tube 118 is approximately 100 to 600 degrees Fahrenheit. In an embodiment, the operating temperature is approximately 300 to 400 degrees Fahrenheit.

In an embodiment, the fluid stream mixture 102 has a viscosity of between 0.1 to 5 centipoise and a density of between 0.35 and 0.55 g/cm$^3$ prior to entering the coil tube 118. The contaminant phase has a melting point of between 100 to 150 degrees Celsius. Once separated, the molten viscosity of the contaminant phase is approximately between 10 to 100,000 centipoise at the operating conditions.

In an embodiment the coil coalescer system 100 can be incorporated into the solvent recovery and purification step disclosed in U.S. Patent App. No. 18/441,416. In this capacity, the liquid or solid contaminants removed from the fluid stream mixture 102 could be undissolved polymers or inert materials and the fluid stream mixture 102 comprises polymer dissolution solvent. The coil coalescer system 100 may be employed anywhere removal of contaminants from solvent is required.

The following equation determines the fluid stream velocity required to remove contaminant particles or droplets of specific size:

$$D_p = \sqrt{9\mu_g w / \pi N_s v(\rho_v - \rho_g)}$$

Where:

$D_p$ is the particle or droplet diameter
$\mu_g$ is the fluid stream viscosity
$w$ is the coil diameter
$N_s$ is the Reynolds number
$v$ is the fluid stream velocity
$\rho_v$ is the contaminant density
$\rho_g$ is the fluid stream density

This equation can be used to guide adjustments the system and method 100 for removing contaminant particles from the fluid stream mixture 102. For instance, this equation can be used to maintain contaminant particle size by adjusting other inputs such as the fluid stream mixture 102 velocity by modulating the coil tube 118 diameter $d_1, d_2, d_3$.

In an embodiment, the contaminant particles have unique properties that enable separation from the fluid stream mixture 102. Without being bound to a particular viscosity range, in an embodiment, the contaminant particles have a viscosity between 1 and 100,000 centipoise to help prevent plugging in the helical coil tube as the contaminant phase 112 separates from the carrier fluid phase 114.

In a preferred embodiment, the contaminant phase 112 has a vapor pressure below the operating pressure of the expansion vessel 106. In the preferred embodiment, the contaminant 112 comprises either a solid, a liquid, or combination thereof at the operating conditions. In alternative embodiments, the contaminant 112 may be saturated with the carrier fluid 114 at the operating conditions so long as the density of the contaminant 112 is greater than the carrier fluid 114. In the preferred embodiment, the density of the contaminant 112 is at least 0.1 g/cm$^3$ greater than the carrier fluid 114 at the operating conditions. In the preferred embodiment, the temperature and pressure at the outlet of the coil tube 118 is optimized to maximize the difference in density between the carrier fluid 114 and the contaminant material 112.

The system and method are designed to collect contaminants in the expansion vessel 106. In an embodiment, a particulate filter 108 located within or downstream of the expansion vessel 106 collects any contaminants that escape the expansion vessel 106 due to high velocity of the vaporized carrier fluid phase 114. Collection of contaminants on the particulate filter 108 can be detected by an increase in the filter differential pressure as the carrier fluid phase 114 flows through the particulate filter 108. This increase in filter differential pressure indicates that the expansion vessel 106 has failed to serve its purpose to collect contaminant 112 and that contaminant 112 is instead collecting on the particulate filter 108. A successful operation of the system and method 100 would display an increase in the level of contaminants within the

expansion vessel 106 with minimal increase in the pressure drop across the particulate filter 108.

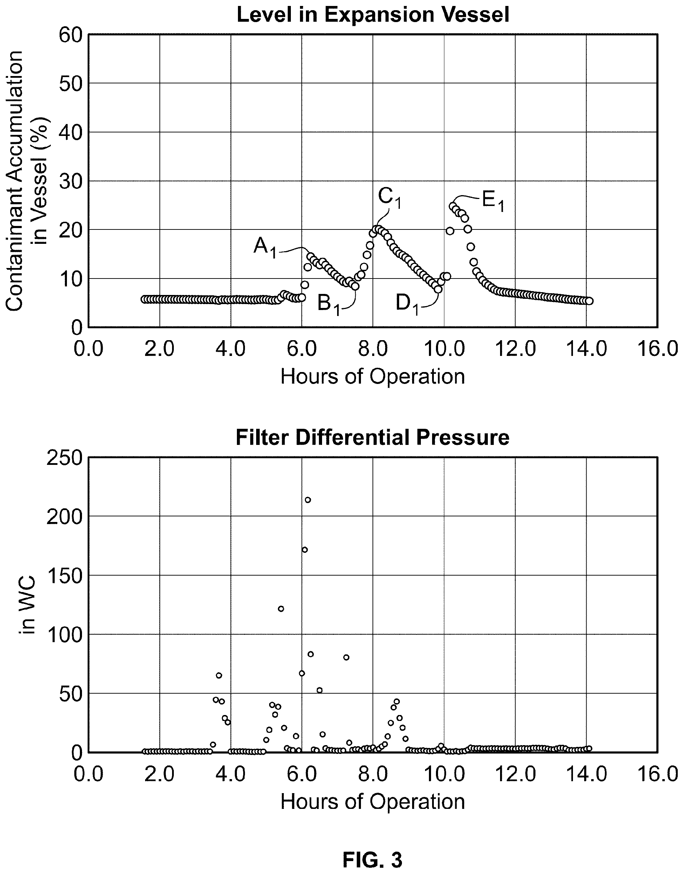

The two graphs in FIG. 3 depict test results from the operation of a contaminant removal system which does not include the coil tube 118. Specifically, the top graph in FIG. 3 depicts the level of contaminant 112 collected (i.e., removed from the fluid stream mixture 102) by the expansion vessel 106 over a period of time. The bottom graph in FIG. 3 depicts the pressure differential across a particulate filter 108 located downstream of the expansion vessel 106.

Without the coil tube 118, less contaminants are separated from the fluid stream mixture 102. The contaminant 112 remaining in the carrier fluid phase 114 is removed via the particulate filter 108, resulting in a reduced contaminant fluid stream. Over time, the buildup of contaminant 112 clogs the particulate filter 108, resulting in a high filter differential pressure. Once the particulate filter 108 is clogged, the filter 108 and contaminant removal system can no longer operate effectively. Therefore, a user must halt the contaminant removal system, clear the particulate filter 108, and restart the system.

Inflection points $A_1$, $C_1$, and $E_1$ represent the maximum accumulation of contaminant within the vessel 106 by volume (as a percentage of the vessel 106) before the contaminant 112 is drained from the low point outlet 120 of the expansion vessel 106. As shown by the top graph of FIG. 3, the contaminant 112 is removed from the vessel 106 in batches such as between inflection points $A_1$ to $B_1$ and $C_1$ to $D_1$. As shown in FIG. 3, during the periods at which contaminant 112 is removed through the low point outlet 120, the removal of contaminant 112 from the vessel 106 occurs faster than the introduction of contaminant 112 into the vessel 106. Inflection points $B_1$ and $D_1$ represent the point at which the low point outlet 120 is closed which in turn allows the volume of contaminant 112 to increase within the vessel 106.

In the bottom graph of FIG. 3, the filter differential pressure increases rapidly and at times exceeds a pressure of 50 inches of water (inWC) when contaminant accumulates on and begins to clog the particulate filter 108 (such as at approximately the 6 hour and 9 hour marks). The large fluctuations in filter differential pressure are emblematic of the failure of a standard contaminant removal system (i.e., a system without the coil tube 118) to separate contaminant material 112 from the fluid stream mixture 102. Instead, significant portions of contaminant material 112 remain in the carrier fluid phase 114, which in this test results in a clogged particulate filter 108. Conversely, as described below, the coil coalescer system 100 (which includes the coil tube 118) is more effective at separating the contaminant material 112 from the fluid stream mixture 102 such that any contaminant material 112 that does remain in the carrier fluid phase 114 is minimal and does not clog the particulate filter 108.

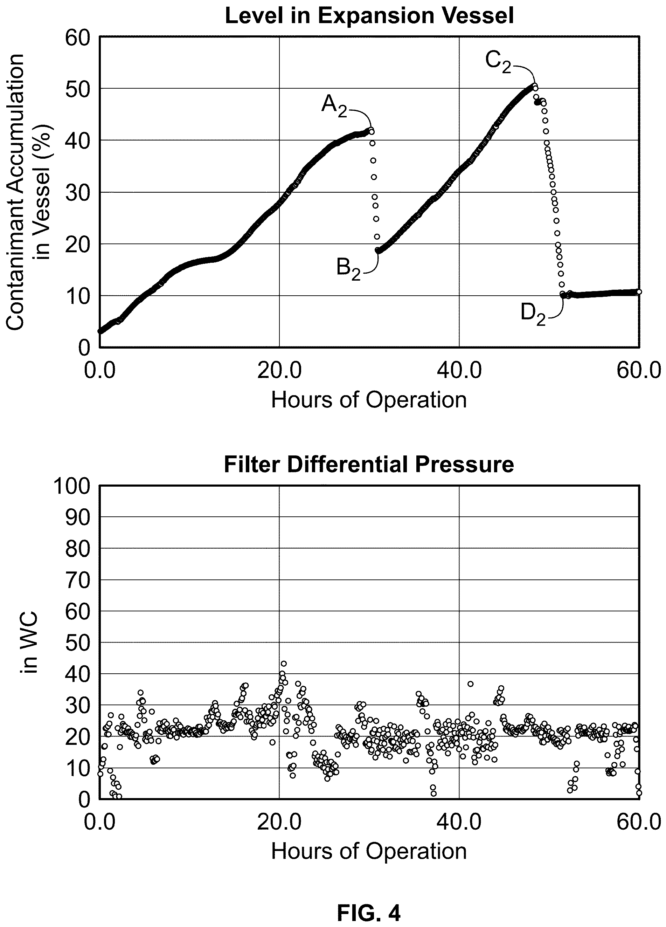

The two graphs in FIG. 4 depict test results from the operation of the coil coalescer system 100 (which includes the coil tube 118). Similar to FIG. 3, the top graph depicts the level of contaminant 112 accumulated (i.e., removed from the fluid stream mixture 102) in the expansion vessel 106 over a period of time. The bottom graph depicts the pressure differential across the particulate filter 108 located downstream of the expansion vessel.

As shown in FIG. 4, the coil coalescer system 100 shows accumulation of contaminant 112 in the expansion vessel 106 occurring with a minimal change in differential pressure over time.

Inflection points $A_2$ and $C_2$, represent the maximum accumulation of contaminant within the vessel 106 by volume (as a percentage of the vessel 106) before the contaminant 112 is drained through the low point outlet 120. As shown in FIG. 4, the contaminant 112 is removed from the vessel 106 in batches such as between inflection points $A_2$ to $B_2$ and $C_2$ to $D_2$. During the periods at which contaminant 112 is removed through the low point outlet 120, the removal of contaminant 112 from the vessel 106 occurs faster than the introduction of contaminant 112 into the vessel 106. Inflection points $B_2$ and $D_2$ represent the point at which the low point outlet 120 is closed which, in turn, allows the volume of contaminant 112 to increase within the vessel 106.

The filter differential pressure measurements recorded in FIG. 4 do not share the same dramatic increases as in FIG. 3, indicating that any leftover contaminant material 112 in the carrier fluid phase was not building up in sufficient volume to clog the filter 108. The minimal change in pressure differential in FIG. 4 is reflective of the fact that less contaminant material 112 remains in the carrier fluid phase 114, thereby reducing the risk of clogging the filter 108 and confirming that more contaminant material 112 is separated due to the coil tube 118. Here the filter differential pressure, with some exceptions, generally falls between a range of approximately 10 to 40 inches of water (inWC).

The phrase "inches of water" (also known as "inch of water column" or "inWC"), is a unit of pressure that measures the force needed to raise a column of water one inch high and is often used to measure pressure which is less than one psi. One psi is equal to 27.71 inWC

For completeness and to further illustrate specific embodiments of the present invention, the following claim-like clauses are provided:

1. A method for removing contaminants from a fluid stream comprising a carrier fluid and a contaminant material, the method comprising:

    introducing the fluid stream through an inlet of a coil tube;

    in the coil tube, inducing the formation of at least a first phase and a second phase of the fluid stream, wherein the first phase has a lower density than the second phase, and wherein a majority of the first phase comprises the

carrier fluid and a majority of the second phase comprises the contaminant material;
flowing the fluid stream from an outlet of the coil tube into an expansion vessel, the expansion vessel having a high point outlet and a low point outlet lower than the high point outlet;
flowing the second phase through the low point outlet; and
flowing the first phase through the high point outlet.

2. The method of removing contaminants from a fluid stream in clause 1, the method further comprising the step of passing the first phase through a particulate filter to remove remaining contaminant material and create a reduced contaminant fluid stream.

3. The method of removing contaminants from a fluid stream in clause 1, further comprising the step of sizing the diameter of the coil tube to partially restrict flow of the fluid stream and induce a pressure loss in the fluid stream across the length of the coil tube, wherein at the inlet of the coil tube pressure is approximately 500 to 5,000 psig and at the outlet of the coil tube pressure is approximately 50 to 4,000 psig.

4. The method of removing contaminants from a fluid stream in clause 1, further comprising the step of controlling pressure of the fluid stream via a control valve upstream of the coil tube.

5. The method of removing contaminants from a fluid stream in clause 1, wherein after the step of inducing the first and second phase, the method comprises the step of vaporizing the first phase of the fluid stream.

6. The method of removing contaminants from a fluid stream in clause 1, further comprising the step of controlling pressure of the fluid stream downstream of the coil tube and upstream of the expansion vessel via a second control valve located between the outlet of the coil tube and expansion vessel.

7. The method of removing contaminants from a fluid stream in clause 1, further comprising the step of applying heat to the fluid stream as it passes through the coil tube.

8. The method of removing contaminants from a fluid stream in clause 7, wherein the temperature of the fluid stream within the coil tube is between approximately 100 to 600 degrees Fahrenheit.

9. The method of removing contaminants from a fluid stream in clause 7, wherein the step of applying heat to the fluid stream comprises wrapping a heat jacket wrapped around the coil tube.

10. The method of removing contaminants from a fluid stream in clause 7, wherein the step of applying heat to the fluid stream comprises introducing a heat transfer fluid into a heat exchange vessel which surrounds the coil tube.

11. The method of removing contaminants from a fluid stream in clause 1, further comprising the step of maintaining the velocity of the fluid stream circulating through the coil tube by providing a plurality of sections of the coil tube, wherein each section of the coil tube comprises a different diameter, the diameter of the coil tube sections increasing in size from the section proximate the inlet of the coil tube to the section proximate the outlet of the coil tube.

12. The method of removing contaminants from a fluid stream in clause 11, wherein each of the plurality of sections of the coil tube comprise a coil tube diameter between at least a quarter of an inch and up to 5 inches and a coil loop diameter between at least 6 inches and up to 24 inches.

13. A system for removing contaminants from a fluid stream, the fluid stream comprising a mixture of carrier fluid and contaminants, the system comprising:

a coil tube having an inlet to receive the fluid stream, an outlet, and a first pressure control valve upstream of the inlet of the coil tube;
wherein the coil tube comprises a plurality of sections having different diameters, the diameter of the coil tube sections increasing in size from a section proximate the inlet to a section proximate the outlet of the coil tube; and
an expansion vessel having an inlet in fluid connection with the outlet of the coil tube, the expansion valve having a high point outlet and a low point outlet.

14. The system for removing contaminants from a fluid stream of clause 13, wherein the coil tube induces a vaporized carrier fluid phase and a contaminant phase of the fluid stream.

15. The system for removing contaminants from a fluid stream of clause 13, wherein the system further comprises a heating system to control temperature within the coil tube.

16. The system for removing contaminants from a fluid stream of clause 15, wherein the heating system comprises:

a heat exchange vessel surrounding the coil tube; and
a heat exchanger continuously cycling heat transfer fluid through the heat exchange vessel.

17. The system for removing contaminants from a fluid stream of clause 15, wherein the heating system comprises a heat jacket wrapped around the coil tube.

18. The system for removing contaminants from a fluid stream of clause 13, wherein the contaminant phase flows through the low point outlet of the expansion vessel and the vaporized carrier fluid flows through the high point outlet of the expansion vessel.

19. The system for removing contaminants from a fluid stream of clause 13, wherein the plurality of sections within the coil tube comprise a tube diameter having a range between at least a quarter of an inch and up to 5 inches and a coil diameter having a range between at least 6 inches up to 24 inches.

20. The system for removing contaminants from a fluid stream of clause 19, wherein the coil tube is installed within a pressurized vessel.

## Claims

**1.** A method for removing contaminants from a fluid stream comprising a carrier fluid and a contaminant material, the method comprising:

introducing the fluid stream through an inlet of a coil tube;
in the coil tube, inducing the formation of at least a first phase and a second phase of the fluid stream, wherein the first phase has a lower density than the second phase, and wherein a majority of the first phase comprises the carrier fluid and a majority of the second phase comprises the contaminant material;
flowing the fluid stream from an outlet of the coil tube into an expansion vessel, the expansion vessel having a high point outlet and a low point outlet lower than the high point outlet;
flowing the second phase through the low point outlet; and
flowing the first phase through the high point outlet.

**2.** The method of removing contaminants from a fluid stream in claim 1, the method further comprising the step of passing the first phase through a particulate filter to remove remaining contaminant material and create a reduced contaminant fluid stream.

**3.** The method of removing contaminants from a fluid stream in any preceding claim, further comprising the step of sizing the diameter of the coil tube to partially restrict flow of the fluid stream and induce a pressure loss in the fluid stream across the length of the coil tube, wherein at the inlet of the coil tube pressure is approximately 500 to 5,000 psig and at the outlet of the coil tube pressure is approximately 50 to 4,000 psig.

**4.** The method of removing contaminants from a fluid stream in any preceding claim, further comprising the step of controlling pressure of the fluid stream via a control valve upstream of the coil tube.

**5.** The method of removing contaminants from a fluid stream in any preceding claim, wherein after the step of inducing the first and second phase, the method comprises the step of vaporizing the first phase of the fluid stream.

**6.** The method of removing contaminants from a fluid stream any preceding claim, further comprising the step of controlling pressure of the fluid stream downstream of the coil tube and upstream of the expansion vessel via a second control valve located between the outlet of the coil tube and expansion vessel.

**7.** The method of removing contaminants from a fluid stream in any preceding claim, further comprising the step of applying heat to the fluid stream as it passes through the coil tube.

8. The method of removing contaminants from a fluid stream in claim 7, wherein the temperature of the fluid stream within the coil tube is between approximately 100 to 600 degrees Fahrenheit.

9. The method of removing contaminants from a fluid stream in any of claims 7 - 8, wherein the step of applying heat to the fluid stream comprises:

   (i). wrapping a heat jacket wrapped around the coil tube; or
   (ii). introducing a heat transfer fluid into a heat exchange vessel which surrounds the coil tube.

10. The method of removing contaminants from a fluid stream any preceding claim, further comprising the step of maintaining the velocity of the fluid stream circulating through the coil tube by providing a plurality of sections of the coil tube, wherein each section of the coil tube comprises a different diameter, the diameter of the coil tube sections increasing in size from the section proximate the inlet of the coil tube to the section proximate the outlet of the coil tube, and optionally wherein each of the plurality of sections of the coil tube comprise a coil tube diameter between at least a quarter of an inch and up to 5 inches and a coil loop diameter between at least 6 inches and up to 24 inches..

11. A system for removing contaminants from a fluid stream, the fluid stream comprising a mixture of carrier fluid and contaminants, the system comprising:

   a coil tube having an inlet to receive the fluid stream, an outlet, and a first pressure control valve upstream of the inlet of the coil tube;
   wherein the coil tube comprises a plurality of sections having different diameters, the diameter of the coil tube sections increasing in size from a section proximate the inlet to a section proximate the outlet of the coil tube; and
   an expansion vessel having an inlet in fluid connection with the outlet of the coil tube, the expansion valve having a high point outlet and a low point outlet.

12. The system for removing contaminants from a fluid stream of claim 11, wherein the coil tube induces a vaporized carrier fluid phase and a contaminant phase of the fluid stream.

13. The system for removing contaminants from a fluid stream of any of claims 11 - 12, wherein the system further comprises a heating system to control temperature within the coil tube, and optionally wherein:

   (i). the heating system comprises:

      a heat exchange vessel surrounding the coil tube; and
      a heat exchanger continuously cycling heat transfer fluid through the heat exchange vessel; or

   (ii). the heating system comprises a heat jacket wrapped around the coil tube.

14. The system for removing contaminants from a fluid stream of any of claims 11 - 13, wherein the contaminant phase flows through the low point outlet of the expansion vessel and the vaporized carrier fluid flows through the high point outlet of the expansion vessel.

15. The system for removing contaminants from a fluid stream of any of claims 11 - 14, wherein the plurality of sections within the coil tube comprise a tube diameter having a range between at least a quarter of an inch and up to 5 inches and a coil diameter having a range between at least 6 inches up to 24 inches, and optionally wherein the coil tube is installed within a pressurized vessel.

102
110a
104
108
122
114
118
116
110b
106
120
112

FIG. 1

118
c1
d1
202
n1
c2
d2
204
n2
d3
206
n3
c3

FIG. 2

Level in Expansion Vessel
Contaminant Accumulation in Vessel (%)
60
50
40
30
20
10
0
0.0
2.0
4.0
6.0
8.0
10.0
12.0
14.0
16.0
Hours of Operation
A1
B1
C1
D1
E1

Filter Differential Pressure
in WC
250
200
150
100
50
0
0.0
2.0
4.0
6.0
8.0
10.0
12.0
14.0
16.0
Hours of Operation

FIG. 3

Level in Expansion Vessel
Contanimant Accumulation in Vessel (%)
60
50
40
30
20
10
0
0.0
20.0
40.0
60.0
Hours of Operation
A2
B2
C2
D2

Filter Differential Pressure
in WC
100
90
80
70
60
50
40
30
20
10
0
0.0
20.0
40.0
60.0
Hours of Operation

FIG. 4

Europäisches
Patentamt
European
Patent Office
Office européen
des brevets

# EUROPEAN SEARCH REPORT

Application Number
EP 25 21 0097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 128 659 A (ALFRED WINKLER) 2 October 1968 (1968-10-02) * page 2, line 28 - page 4, line 107; figures 1,4 * | 1-6,8-15 | INV. B01D7/02 B01D9/00 B01D17/02 B01D17/04 |
| X | GB 193 030 A (ALEXIS JEAN MARIE RIALLAND) 17 January 1924 (1924-01-17) * page 2, lines 82-117; figures 1,3 * | 1-3,5-15 | |
| A | US 2003/178377 A1 (LARSON DOUGLAS ALAN [US] ET AL) 25 September 2003 (2003-09-25) * the whole document * | 1-15 | |

TECHNICAL FIELDS SEARCHED (IPC)

B01D

The present search report has been drawn up for all claims

| Place of search | Date of completion of the search | Examiner |
|---|---|---|
| The Hague | 19 March 2026 | Thibault, Valerie |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 21 0097

This annex lists the patent family members relating to the patent documents cited in the above-mentioned European search report. The members are as contained in the European Patent Office EDP file on
The European Patent Office is in no way liable for these particulars which are merely given for the purpose of information.

19-03-2026

| Patent document cited in search report | Publication date | Patent family member(s) | Publication date |
|---|---|---|---|
| GB 1128659 A | 02-10-1968 | AT 257663 B | 25-10-1967 |
| | | BE 671071 A | 14-02-1966 |
| | | CH 429610 A | 31-01-1967 |
| | | DE 1519564 A1 | 12-03-1970 |
| | | DE 1519569 A1 | 02-07-1970 |
| | | GB 1128659 A | 02-10-1968 |
| | | IL 24472 A | 12-11-1969 |
| | | NL 6513531 A | 21-04-1966 |
| | | SE 320046 B | 02-02-1970 |
| | | US 3321002 A | 23-05-1967 |
| GB 193030 A | 17-01-1924 | NONE | |
| US 2003178377 A1 | 25-09-2003 | US 2003178377 A1 | 25-09-2003 |
| | | US 2005082238 A1 | 21-04-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20230174736 A1
- WO 2022223491 A2
- WO 2022219090 A1
- US 10899906 B
- US 11008433 B
- US 10961366 B
- US 9834621 B
- US 441416